Europäisches Patentamt

European Patent Office

Office européen des brevets

(11) Veröffentlichungsnummer: **0 507 123 A2**

# EUROPÄISCHE PATENTANMELDUNG

(21) Anmeldenummer: **92104194.3**

(22) Anmeldetag: **11.03.92**

(51) Int. Cl.5: **B23Q 1/06**, B23Q 1/16

(30) Priorität: **11.03.91 DE 4107757**

(43) Veröffentlichungstag der Anmeldung:
**07.10.92 Patentblatt 92/41**

(84) Benannte Vertragsstaaten:
**AT BE CH DE DK ES FR GB GR IT LI LU NL SE**

(71) Anmelder: **EMAG MASCHINENFABRIK GMBH**
**Austrasse 24**

**W-7335 Salach/Württemberg(DE)**

(72) Erfinder: **Hessbrüggen, Norbert**
**Sudetenstrasse 47/2**
**7321 Eschenbach(DE)**

(74) Vertreter: **Zmyj, Erwin, Dipl.-Ing.**
**Rosenheimer Strasse 52**
**W-8000 München 80(DE)**

(54) **Werkzeugmaschine mit Hohlspindel zum simultanen Bearbeitung zweier Enden eines Werkstückes.**

(57) Die Mittenantriebsmaschine weist einen Spindelkasten (1) mit vier antreibbaren Hohlspindeln (2, 3, 4, 5) auf, denen auf jeder Seite zwei Werkzeugträgerschlitten (7, 8 bzw. 9, 10) zugeordnet sind. Die Werkzeugträgerschlitten (7, 8 bzw. 9, 10) sind quer zur Spindelachse zwischen zwei Arbeitsplätzen verfahrbar, wobei sie in der einen Arbeitsplatzstellung den Spindeln 2, 3 und der anderen Arbeitsplatzstellung den Hohlspindeln (4, 5) in Arbeitsstellung gegenüberliegen. Die jeweils anderen Spindeln können durch eine Ladevorrrichtung be- und entladen werden.

Fig. 1

EP 0 507 123 A2

Die Erfindung bezieht sich auf eine Mittenantriebsmaschine mit einem Spindelkasten mit angetriebener Hohlspindel und zu beiden Seiten des Spindelkastens angeordneten Werkzeugträgerschlitten, die zur Bearbeitung der in der Hohlspindel eingespannter Werkstücke in Richtung der Spindelachse und quer hierzu Arbeitsbewegungen ausführen.

Bei Mittantriebsmaschinen dieser Art ist es für den Be- und Entladevorgang der Maschine erforderlich, den Werkzeugträgerschlitten so weit aus dem Spannbereich der Maschine wegzufahren, daß das Werkstück, welches in die Hohlspindel der Maschine eingeführt werden muß, in Richtung der Spindelachse hinein- bzw. aus der Hohlspindel wieder herausgeführt werden kann. Während dieser Zeit ist nicht nur der Spindelkasten, sondern auch der Werkzeugträgerschlitten mit der dazugehörigen Steuerung ungenutzt. Da Mittenantriebsmaschinen dieser Art hohe Investitionen erfordern, ist dieser Zustand unbefriedigend, zumal wenn die Stillstandzeit aufgrund des Be- und Entladens die gleiche Größenordnung aufweist, wie die Bearbeitungszeit, was in der Praxis unterstellt werden kann.

Aufgabe der Erfindung ist es, eine Mittenantriebsmaschine so auszugestalten, daß eine bessere Ausnutzung der Investition erreicht wird.

Diese Aufgabe wird ausgehend von einer Mittenantriebsmaschine der eingangs erläuterten Art erfindungsgemäß dadurch gelöst, daß der Spindelkasten zwei oder ein ganzzahliges Vielfaches von zwei angetriebene Hohlspindeln aufweist, daß auf jeder Seite des Spindelkastens jeweils ein Werkzeugträgerschlitten jeweils zwei Hohlspindeln zugeordnet ist und daß die Hohlspindeln und der Werkzeugträgerschlitten senkrecht zur Spindelachse relativ zueinander zwischen zwei Arbeitsplätzen bewegbar sind, wobei in der einen Arbeitsplatzstellung der Werkzeugträgerschlitten der einen Hohlspindel und in der anderen Arbeitsplatzstellung der anderen, von jeweils zwei dem Werkzeugträgerschlitten zugeordneten Hohlspindeln gegenüberliegt. Die Werkzeugschlitten können vorzugsweise als Kreuzschlitten ausgebildet sein.

Aufgrund dieser Ausgestaltung, bei der also jeweils ein Werkzeugträgerschlitten auf einer Seite der Mittenantriebsmaschine zwei Hohlspindeln zugeordnet ist, ist es möglich, den Werkzeugträgerschlitten und die dazugehörige Steuerung bis auf die relativ kurzen Zeiten, die notwendig sind, um eine Relativverschiebung zwischen Hohlspindel und Werkzeugträgerschlitten herbeizuführen, ständig zu nutzen. Der Werkzeugträgerschlitten ist also praktisch ständig bei einer der beiden zugeordneten Hohlspindeln des Spindelkastens im Einsatz während die andere Hohlspindel be- bzw. entladen werden kann.

Gemäß einer bevorzugten Ausgestaltung der Erfindung ist vorgesehen, daß der Spindelkasten fest und die einander gegenüberliegenden Werkzeugträgerschlitten zusätzlich zu ihren Arbeitsbewegungen auch noch zur Arbeitsplatzänderung quer zur Spindellängsachse verfahrbar sind. Diese Ausgestaltung erfordert nur entsprechende Führungsleisten für die Verfahrbarkeit der Werkzeugträgerschlitten und ist deshalb in baulicher Hinsicht einfach.

Eine weitere Vereinfachung ist dann möglich, wenn in weiterer Ausgestaltung der Erfindung die Arbeitsbewegung quer zur Spindelachse und die quer zur Spindelachse verlaufende Bewegung zur Arbeitsplatzänderung durch den gleichen NC-gesteuerten Antrieb erfolgt.

Es ist auch möglich, daß die einander gegenüberliegenden Werkzeugträgerschlitten hinsichtlich der Arbeitsplatzänderung fest sind und der Spindelkasten um eine quer und symmetrisch zu den beiden Hohlspindeln gelegene Achse schwenkbar gelagert ist.

In weiterer vorteilhafter Ausgestaltung der Erfindung können, bei Ausbildung des Spindelkastens mit vier oder vier mal n Hohlspindeln, wobei n ≥ 2 ist, auf jeder Seite des Spindelkastens, jeweils zwei Werkzeugträgerschlitten auf einem quer zur Spindelachse verfahrbaren Tragschlitten angeordnet sein.

Hierdurch ist jeweils ein Tragschlitten mit zwei Werkzeugträgerschlitten zwei Hohlspindeln zugeordnet, wobei nach der Bearbeitung der in den beiden Hohlspindeln eingespannten Werkstücke, der Tragschlitten zu zwei benachbarten Hohlspindeln verfahren wird, um dort mit den beiden Werkzeugträgerschlitten die in den anderen beiden Hohlspindeln eingespannten Werkstücke zu bearbeiten. Nach dieser Bearbeitung wird der Tragschlitten wieder zu dem vorhergehenden Paar von Hohlspindeln zurückgefahren. Auf diese Weise ist für jeweils zwei Werkzeugträgerschlitten nur ein einziger Antrieb für die Verschiebung zwischen zwei Arbeitsplätzen beider Werkzeugträgerschlitten erforderlich. Dieser Antrieb dient sowohl für die Verschiebung des Tragschlittens für eine Arbeitsplatzänderung als auch zur Durchführung von Arbeitsbewegungen in Y-Richtung, d. h. quer zur Spindellängsachse. Hierbei ist jedoch Voraussetzung, daß beide in benachbarten Hohlspindeln eingespannte Werkstücke in gleicher Weise bearbeitet werden. Für den Fall, daß dies nicht vorliegt, müssen die einzelnen Trägerschlitten durch zusätzliche Verstell- oder Antriebsvorrichtungen unterschiedlich angestellt bzw. verschoben werden.

Die Erfindung ist in der Zeichnung beispielsweise dargestellt. In dieser zeigen.

Figur 1 : eine schematische Darstellung eines Spindelkastens mit vier Hohlspindeln und jeweils zwei Werkzeugträgerschlitten auf jeder Spindelkastenseite in Draufsicht;

Figur 2 : eine Ansicht einer Mittenantriebsmaschine gemäß Figur 1 quer zur Spindelachse;

Figur 3 : eine Seitenansicht in Richtung der Spindelachse einer weiteren Ausführungsform einer Mittenantriebsmaschine; und

Figur 4 : eine Seitenansicht einer Mittenantriebsmaschine gemäß Figur 3 quer zur Spindelachse.

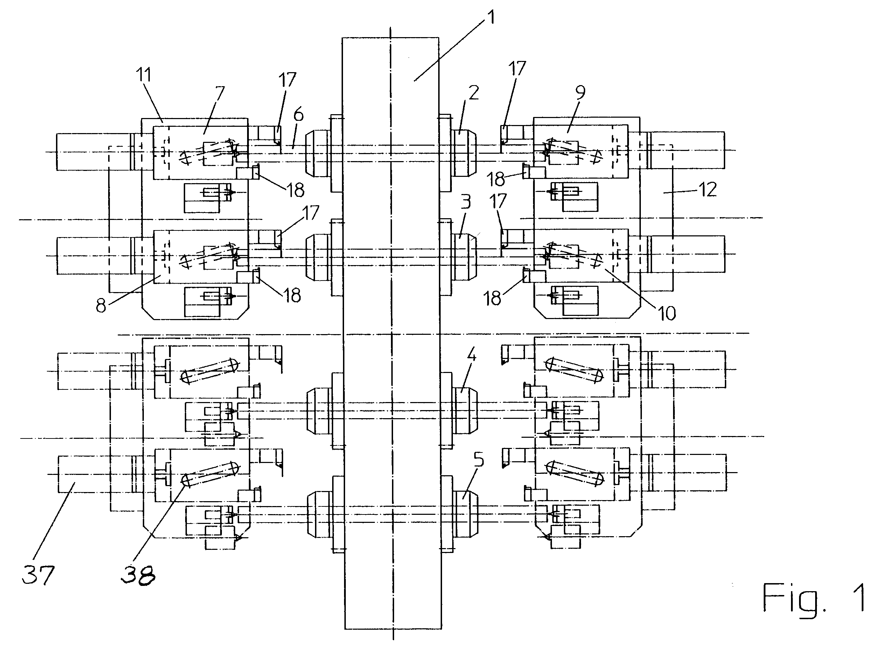

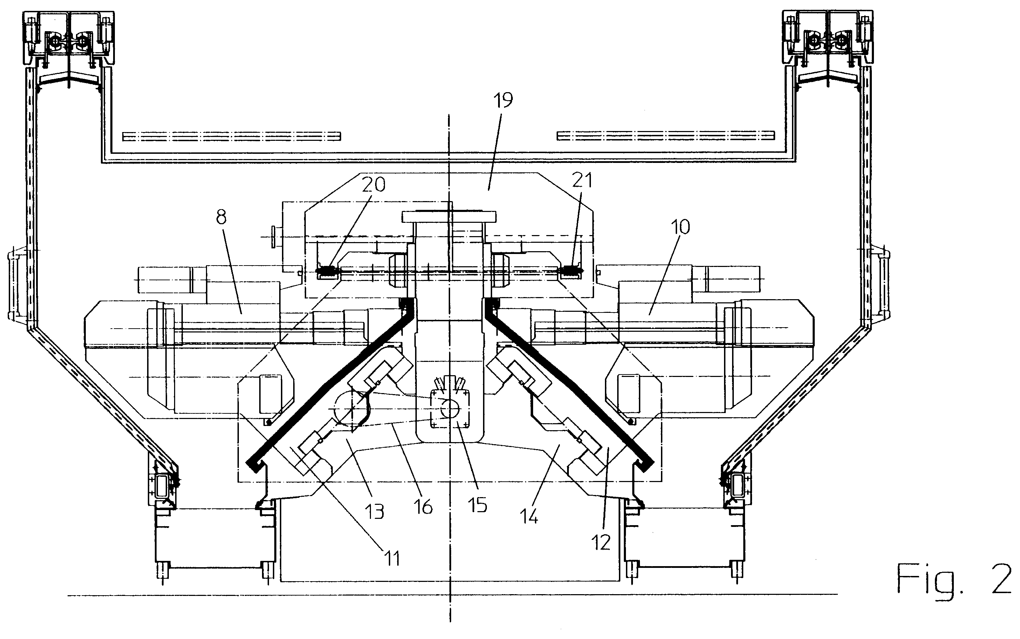

Bei der ersten, in den Figuren 1 und 2 dargestellten Ausführungsform ist ein insgesamt mit 1 bezeichneter Spindelkasten vorgesehen, der vier antreibbare Hohlspindeln 2, 3, 4 und 5 aufweist. Diese Hohlspindeln sind in bekannter Weise zur Aufnahme von Werkstücken 6 in Form von Wellen oder Rohren vorgesehen, die zu beiden Seiten über die jeweilige Hohlspindel hervorstehen und im überstehenden Bereich bearbeitet werden können. Hierfür sind an gegenüberliegenden Seiten des Spindelkastens jeweils zwei Werkzeugträgerschlitten 7, 8 bzw. 9, 10 vorgesehen, die jeweils auf einem gemeinsamen Tragschlitten 11, 12 in Richtung der Spindelachse verfahrbar angeordnet und mit diesem quer zu den Spindelachsen verfahrbar sind. Hierfür sind die Tragschlitten 11 und 12 auf jeweils einem Führungsbett 13 bzw. 14 verfahrbar angeordnet. Mit 15 ist ein Antriebsmotor bezeichnet, der über einen mit strichpunktierten Linien angedeuteten Riementrieb 16 eine nicht dargestellte Kugelrollspindel antreibt, die mit einer am Tragschlitten drehfest gehaltenen Mutter zusammenwirkt, um eine Verschiebebewegung des entsprechenden Tragschlittens zu bewirken.

Wie aus Figur 1 ersichtlich, befinden sich die Werkzeugträgerschlitten 7, 8, 9 und 10 in Arbeitsstellung in bezug auf die Hohlspindeln 2 und 3, wobei Schneidwerkzeuge 17, 18, die jeweils von einem Werkzeugträgerschlitten 7 bis 10 getragen sind, jeweils ein Ende eines Werkstückes 6 bearbeiten. Da bei der hier dargestellten Bearbeitung beide Werkzeuge, d.h. je ein Werkzeug links und rechts vom Werkstück, im Eingriff sind, ist es notwendig, zumindest ein Schneidwerkzeug, d.h. eine Schneide, zu korrigieren, damit der Abstand zwischen beiden Schneiden bei der Außenbearbeitung des Werkstückes z.B. dem gewünschten Soll-Durchmesser entspricht. Diese Korrektureinstellung des Werkzeuges 17 wird durch einen Servomotor 37 bewirkt, der den Werkzeugträgerschlitten 7 bis 10 in Längsrichtung verschiebt, wobei eine Schräge 38 eine feine Verstellmöglichkeit der Schneide senkrecht zur Spindelachse ermöglicht. Während der Bearbeitung der in den Hohlspindeln 2 und 3 eingespannten Werkstücke kann ein Werkstückwechsel bei den Hohlspindeln 4 und 5 mittels einer nicht dargestellten geeigneten Ladevorrichtung vorgenommen werden. Wenn die Werkstücke in den Hohlspindeln 2 und 3 fertig bearbeitet sind, werden die Tragschlitten 11 und 12 quer zu den Achsen der Hohlspindeln verschoben, bis die Werkzeugträgerschlitten 7, 8 und 9, 10 den Hohlspindeln 4 und 5 gegenüberliegen, um die in diesen Spindeln neu eingespannten Werkstücke zu bearbeiten. In dieser Zeit können dann die Werkstücke der Hohlspindeln 2 und 3 gegen neue Werkstücke ausgewechselt werden. Auf diese Weise sind die Werkzeugträgerschlitten mit ihren Steuerung mit Ausnahme der Verschiebezeit ständig im Einsatz.

Mit dem Bezugszeichen 19 ist ein auf dem Spindelkasten angeordneter Reitstock bezeichnet, der zwei Pinolen 20 und 21 aufweist, mit denen die gegenüberliegenden freien Enden eines Werkstückes 6 abgestützt werden können. Selbstverständlich ist der Reitstock 19 verfahrbar, um die Hohlspindel be- und entladen zu können.

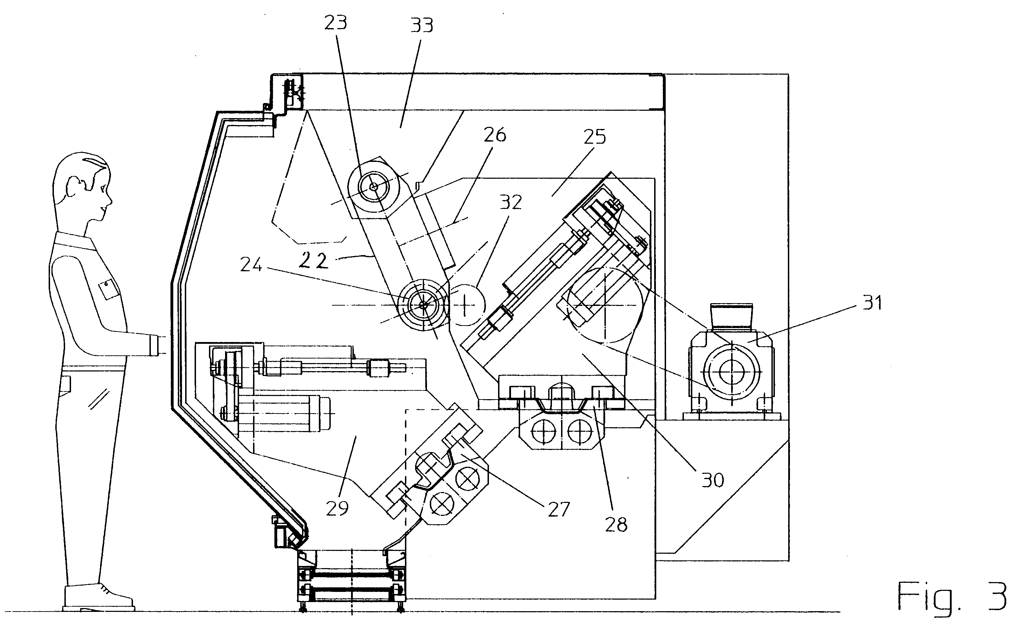

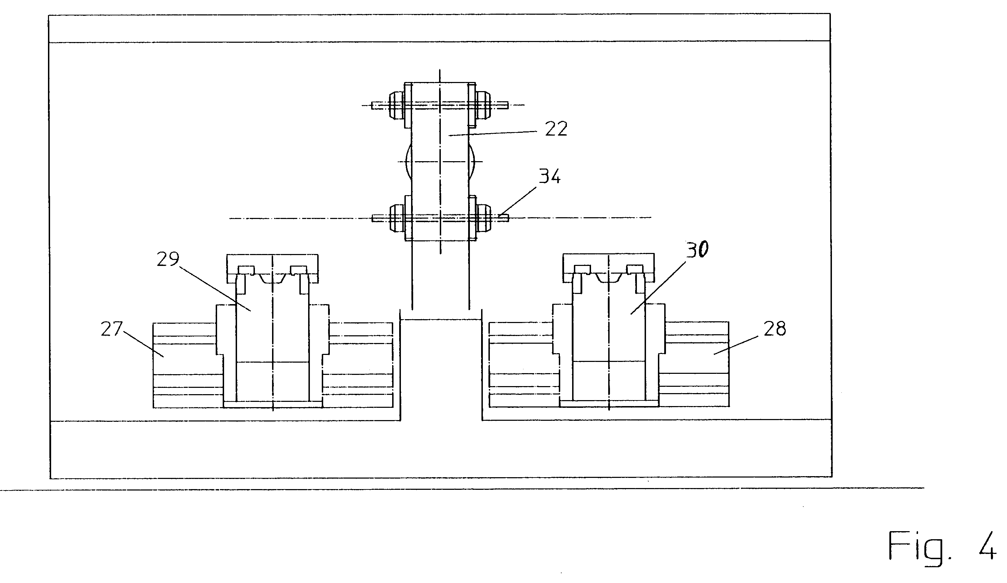

Bei der weiteren in den Figuren 3 und 4 dargestellten Ausführungsform einer Mittenantriebsmaschine ist ein Spindelkasten 22 mit zwei antreibbaren Hohlspindeln 23 und 24 vorgesehen, der an einem mit dem Maschinenbett fest verbundenen Ausleger 25 um eine Achse 26 schwenkbar gelagert ist, die quer und symmetrisch zu den Spindelachsen verläuft.

Auf zwei Bettführungen 27 und 28 ist jeweils ein Werkzeugträger-Kreuzschlitten 29 und 30 angeordnet, die hinsichtlich der Arbeitsplatzänderung fest sind, da die Hohlspindeln verschwenkbar sind. Der Werkzeugträger-Kreuzschlitten 29 bzw. 30 ermöglicht sämtliche Bewegungen, die zur Bearbeitung des in der jeweiligen Hohlspindel eingespannten Werkstückes notwendig sind, d. h. insbesondere Bewegungen in Richtung der Spindelachse und quer hierzu. Mit 31 ist ein Antriebsmotor für ein schematisch angedeutetes Getriebe 32 zum Antrieb einer Hohlspindel, im dargestellten Falle der Hohlspindel 24 vorgesehen, die sich in Arbeitsstellung befindet. Die andere Hohlspindel 23 befindet sich nicht in Arbeitsstellung und ist auch vom Getriebe 32 abgekoppelt. In der dargestellten Lage kann die Hohlspindel 23 von einer schematisch angedeuteten Ladevorrichtung 33 be- und entladen werden. Die Werkzeugträgerschlitten 29 und 30 sind so angeordnet, daß sie die beiden überstehenden Enden eines Werkstückes 34, das in der Hohlspindel 24 eingespannt ist, bearbeiten können. Die entsprechenden Werkzeuge sind zur Vereinfachung der Zeichnung in diesem Ausführungsbeispiel nicht dargestellt.

Auch bei dieser Ausführungsform sind die beiden Werkzeugträgerschlitten 29 und 30 mit Ausnahme der Zeit, die für das Verschwenken des Spindelkastens 22 notwendig ist, ständig im Einsatz, weil jeweils eine Hohlspindel sich in der Arbeitsstellung befindet, während die andere Hohlspindel von der Ladevorrichtung 33 be- bzw. entladen wird, um für den nächsten Arbeitsvorgang vorbereitet zu werden.

**Patentansprüche**

1. Mittenantriebsmaschine mit einem Spindelkasten mit angetriebener Hohlspindel und zu beiden Seiten des Spindelkastens angeordneten Werkzeugträgerschlitten, die zur Bearbeitung der in der Hohlspindel eingespannter Werkstücke in Richtung der Spindelachse und quer hierzu Arbeitsbewegungen ausführen, **dadurch gekennzeichnet,** daß der Spindelkasten (1; 22) zwei oder ein geradzahliges Vielfaches von zwei angetriebene Hohlspindeln (2, 3, 4, 5; 23, 24) aufweist, daß auf jeder Seite des Spindelkastens (1; 22) jeweils ein Werkzeugträgerschlitten (7, 8, 29; 9, 10, 30) jeweils zwei Hohlspindeln (2, 4; 3, 5; 23, 24) zugeordnet ist und daß die Hohlspindeln und der Werkzeugträgerschlitten senkrecht zur Spindelachse relativ zueinander zwischen zwei Arbeitsplätzen bewegbar sind, wobei in der einen Arbeitsplatzstellung der Werkzeugträgerschlitten (7, 8, 29; 9, 10, 30) der einen Hohlspindel (2; 3; 24) und in der anderen Arbeitsplatzstellung der anderen, von jeweils zwei dem Werkzeugträgerschlitten zugeordneten Hohlspindeln (4; 5; 23) gegenüberliegt.

2. Mittenantriebsmaschine nach Anspruch 1, dadurch gekennzeichnet, daß die Werkzeugträgerschlitten (7, 8, 29; 9, 10, 30) als Kreuzschlitten ausgebildet sind.

3. Mittenantriebsmaschine nach Anspruch 1 oder 2, **dadurch gekennzeichnet,** daß der Spindelkasten (1) fest und die einander gegenüberliegenden Werkzeugträgerschlitten (7, 8, 9, 10) zusätzlich zu ihren Arbeitsbewegungen auch noch zur Arbeitsplatzänderung quer zur Spindelachse verfahrbar sind.

4. Mittenantriebsmaschine nach Anspruch 3, dadurch gekennzeichnet, daß die Arbeitsbewegung quer zur Spindelachse und die quer zur Spindelachse verlaufende Bewegung zur Arbeitsplatzänderung durch den gleichen NC-gesteuerten Antrieb erfolgen.

5. Mittenantriebsmaschine nach Anspruch 1 oder 2, **dadurch gekennzeichnet,** daß die einander gegenüberliegenden Werkzeugträgerschlitten (29, 30) hinsichtlich der Arbeitsplatzänderung fest sind und der Spindelkasten (22) um eine quer und symmetrisch zu den beiden Hohlspindeln gelegene Achse (26) schwenkbar gelagert ist.

6. Mittenantriebsmaschine nach einem der Ansprüche 1 bis 5, **dadurch gekennzeichnet,** daß bei Ausbildung des Spindelkastens (1) mit vier oder vier mal n Hohlspindeln (2, 3, 4, 5), wobei n ≥ 2 ist, auf jeder Seite des Spindelkastens (1) jeweils zwei Werkzeugträgerschlitten (7, 8; 9, 10) auf einem quer zur Spindelachse verfahrbaren Tragschlitten (11; 12) angeordnet sind.

Fig. 1

EP 0 507 123 A2

Fig. 2

Fig. 3

Fig. 4

EP 0 507 123 A2